# EUROPEAN PATENT APPLICATION

(11) **EP 2 106 141 A2**
(43) Date of publication of application: **30.09.2009**
(21) Application number: 09156070.6
(22) Date of filing: 24.03.2009
(51) Int. Cl.: H04N 7/173

(54) **Access control system for inflight services at passenger seat**

(30) Priority: 25.03.2008 US 39144 P; 21.04.2008 US 106432
(71) Applicant: Inflight Investments Inc., St Laurent, Québec H4S 1C7 (CA)
(72) Inventor: Smallhorn, George R., Québec H4S 1C7 (CA)
(74) Representative: Gillam, Francis Cyril

(57) **Abstract**

An access control system for controlling individualized access, by passengers of a vehicle, to data transmissions and electrical power including a transmission source (15,27); a passenger access interface (3,20); and a control circuit in communication with the transmission source. The control circuit includes: a microprocessor (12) with memory storage (13), the microprocessor having a control signal emitter (16,21,22,24) in communication with the transmission source, where the control signal determines access between the transmission source (15,27) and the passenger access interface (3,20); and a portable memory device (5) including stored access control software readable by the microprocessor for determining when a control signal is to be emitted, the portable memory device (5) being removable by the passenger.

## Description

### TECHNICAL FIELD

The invention relates to an access control system for enabling passenger access to various inflight services available through equipment installed for viewing facing a seated passenger or otherwise operated by a seated passenger, for example: in the back of an aircraft passenger seat; on an articulated arm from the seat armrest; deployed from an overhead compartment; or a facing cabin wall.

### BACKGROUND OF THE ART

Many commercial airlines are up-grading the entertainment amenities in their passenger cabins by the installation of various passenger amenity systems at each individual seat. An increasingly important component is the provision of passenger entertainment systems, mobile telephone services, laptop power and computer communications connectivity. To improve service, airlines are retrofitting existing aircraft and ordering newly built aircraft with audio and video entertainment on demand (AVOD), telephone, intercom, television, video games, internet, email and electrical power supply for laptop computers (AC power), to permit passengers to work during the flight, communicate or seek entertainment.

These amenities, are generically called Inflight Entertainment (IFE) and In Seat Power Systems (ISPS), and are provided at individual passenger seats so that they are individually controlled by the seated passenger as opposed to traditional entertainment that is displayed or communicated to all passengers in the same format. Communication amenities (COM) include internet access, email, satellite or cellular telephone access. Entertainment amenities include Audio, Video On Demand (AVOD) systems with seat mounted 'smart' video monitors used for the delivery of video and audio entertainment on demand or on a distributed basis, Universal Serial Bus (USB) Ports that provide the passengers with both a means of access to the AVOD system for games and internet access and very low voltage DC electricity that can be used to power some personal electronic devices such as an iPOD™ MP3 player and electrical power outlets that provide the passenger with access to either low voltage DC or 110V AC power for laptop computers or larger devices that can not be powered through the USB port and other devices requiring power or battery recharging such as telephones, hand held computers (ex: Blackberry™), and other communication equipment.

Installing inflight service equipment and wiring for such systems often includes mounting visual display units at eye level. Various means of mounting include installing equipment: in the back of an adjacent seat; on an articulated arm from the seat armrest; on an articulated arm from the underside or front of the seat; deployed from an overhead compartment; or a cabin wall facing the seated passenger. Various control systems are commonly used such as credit card swipe scanning slots, touch screen displays, push button keyboards and remote control units. The wiring for such equipment is run between passenger seats and various computer servers or other electronic equipment preferably under the cabin floor panels.

The electrical power to run such inflight amenities or services is substantial in the self-contained operating environment of an aircraft. Effectively, all electrical power on an aircraft including optional inflight entertainment and other passenger services that consume power must originate with aircraft fuel to generate electricity and/or stored in aircraft batteries. In either case the aircraft efficiency is penalized with the need to carry more fuel and/or carry the weight of larger batteries to supply power for the passenger amenities described above. Therefore economical use of non-essential electrical power and the avoidance of waste are important issues in operating inflight entertainment, inflight communications and other such aircraft passenger services.

Further, the demand for inflight services varies considerably between passengers. Some passengers such as business passengers may prefer to use email, internet, telephone services during a flight. Holiday passengers may prefer audio-video on demand, video gaming or television services during a flight. To pay for installing and ongoing maintenance of such services, the airline must incorporate the expenses into their operating budget and the expenses are ultimately included in charges to passengers. Expenses can be included in the price of tickets sold to passengers or alternatively expenses can be charged directly to those passengers who choose to use the services available. For example, it is common to have credit card reading equipment in aircraft seat backs associated with cellular telephone equipment that charges passengers for use.

Some airlines allow these amenities to be accessed and used at no charge to the passenger. Others allow access on payment using a credit card where the credit card data is entered using a credit card reader or by the touch screen on a smart monitor. When this equipment is exposed to operation by the passengers, wear and tear, vandalism, and accidental damage occurs increasing expenses to maintain the electronic equipment.

Airlines are actively engaged in a process to determine ways to create a viable revenue stream derived from these systems to pay for the expenses of installation, operation and maintenance as well as to generate increased profit. However the equipment that must be installed to allow on-board, simply for the collection of the fees, the efforts required to maintain the fee collection systems, and the operational infrastructure to administer the fee collections offset much if not all of the revenue gained

This traditional approach has many disadvantages such as;
the credit card swipe scanning device must be purchased, installed and maintained by the airline;
the card swipe device or AVOD system must have a program which will recognize the credit cards swiped and transfer the data to a central file server on board the aircraft where a secure credit card program resides to check validity of the individual credit card;
the secure credit card program must be frequently updated and re-loaded into the file server on each aircraft so that updates to card expiration dates and credit limits can be updated and kept current;
the credit card data, now stored in the file servers on each aircraft, must be retrieved, processed and transmitted to the appropriate credit card company so that the airline can receive the revenue; and
the payment system on the aircraft must be highly secure and reliable to avoid compromise of the passenger data and passenger confusion with the inability to access the features of their choice that creates frustration when paid for and the system fails to deliver.

Beside all of the issues listed above, before the airline can even hope to receive fair and legitimate payment for services provided, it must be assumed that each step can be accomplished without any disruptions such as power failures on any aircraft during data download procedures, the availability of each aircraft at a location where the download can take place and that the credit cards used by passengers are valid.

In addition, the airline will, due to alleged failures or shortcomings of the system, be faced with refund demands for real or perceived shortcomings of any system and the airline must bear the administrative burden to manage the complete process.

Further, some airlines may not have 'smart' LCD Monitors with touch screen capability or only have an AC Power Outlet. The absence of the 'smart' LCD Monitor eliminates many procedures for the airlines to recover costs, using conventional credit card systems currently in use.

Accordingly it is desirable minimize consumption of electrical power and other inflight services. Concurrently it is desirable to avoid waste, such as continuous operation of services while a passenger is otherwise occupied or has simply fallen asleep.

It is further desirable that airlines have the ability to recover the costs of installing, operating, and maintaining inflight services.

It is preferable that airlines have the option of tailoring pricing for various flights, different seat categories and different passengers in a very flexible manner. An airline may prefer that the primary users of services pay for the services that they use, while those who do not use inflight services to the same degree or not at all, are not burdened with the costs of inflight services that they do not use. Alternatively for the same aircraft flying to a different destination, the airline may choose to include the costs of inflight services in the price of tickets. An access control system for the inflight services that enables rapid modification and tailoring is desirable.

Features that distinguish the present invention from the background art will be apparent from review of the disclosure, drawings and description of the invention presented below.

### SUMMARY OF THE INVENTION

An access control system is provided for controlling individualized access, by passengers of a vehicle, to data transmissions and electrical power including a transmission source; a passenger access interface; and a control circuit in communication with the transmission source. The control circuit includes: a microprocessor with memory storage, the microprocessor having a control signal emitter in communication with the transmission source, where the control signal determines access between the transmission source and the passenger access interface; and a portable memory device including stored access control software readable by the microprocessor for determining when a control signal is to be emitted, the portable memory device being removable by the passenger.

### DESCRIPTION OF THE DRAWINGS

In order that the invention may be readily understood, an embodiment of the invention is illustrated by way of example in the accompanying drawings.

Figure 1 is a perspective view of two passenger seats used in an aircraft passenger cabin showing a visual display screen mounted to the back of the seats for use in providing inflight services to passengers in the seats immediately rearward.

Figure 2 is a detailed view of the top portion of the seat back display in Fig. 1 showing a USB port (universal serial bus) and a 110V electric outlet as a physical example of inflight service for powering a passenger's laptop computer or other equipment used by the passenger while seated.

Figure 3 shows an exploded view of an aircraft passenger seat armrest with the rear cushion removed to reveal a possible location for the control circuit and related equipment.

Figure 4 shows a detail view of a typical USB port.

Figure 5 shows an alternative USB port with "time remaining" value displayed.

Figure 6 shows a schematic view of a first embodiment of the access control system configured to permit access to four 110V AC power outlets of a four seat assembly using USB ports to operate four relay switch and removable USB memory sticks also known as USB flash drives.

Figure 7 shows a schematic view of a second embodiment of the access control system configured to permit access to four 110V AC power outlets as in Fig. 6 but with additional access control to four video displays through control of DC power to each video display.

Figure 8 shows a schematic view of a third embodiment of the access control system configured to permit access to four 110V AC power outlets using a data bus and keylines to transmit signals the electric power source and to each video display.

Figure 9 shows a schematic view of a fourth embodiment of the access control system of Figure 8 where wireless transmitter/receiver units replace wired connections between the microprocessor and the power source, and between the microprocessor and the video displays.

Further details of the invention and its advantages will be apparent from the detailed description included below.

### DETAILED DESCRIPTION OF PREFERRED EMBODIMENTS

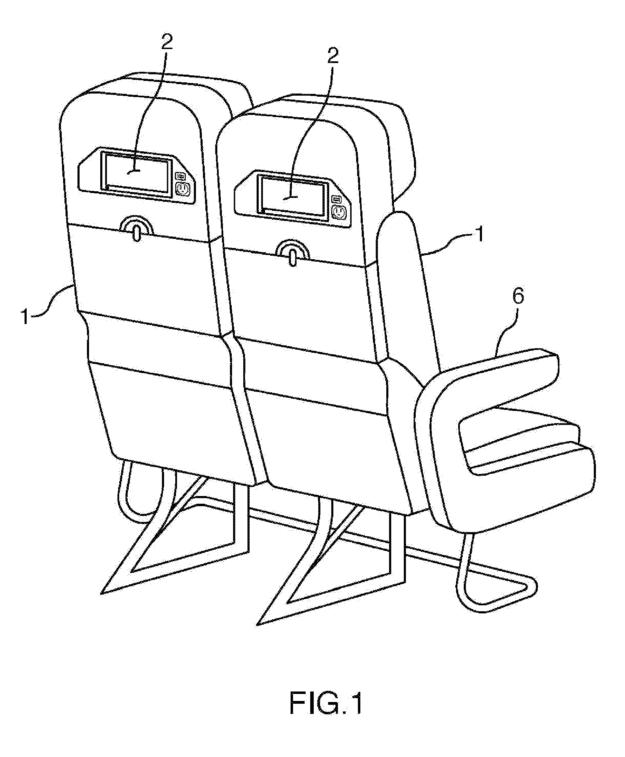

Figure 1 is a perspective view of two passenger seats 1 typical for use in an aircraft passenger cabin. A visual display screen 2 is mounted to the back of the seats 1 for providing inflight services to passengers in the seats immediately rearward of the display screen 2. The location of the equipment shown in Figures 1-2 is only an example. As mentioned above, other locations may include equipment: on an articulated arm from the seat armrest; on an articulated arm from the underside or front of the seat; deployed from an overhead compartment; or a cabin wall facing the seated passenger.

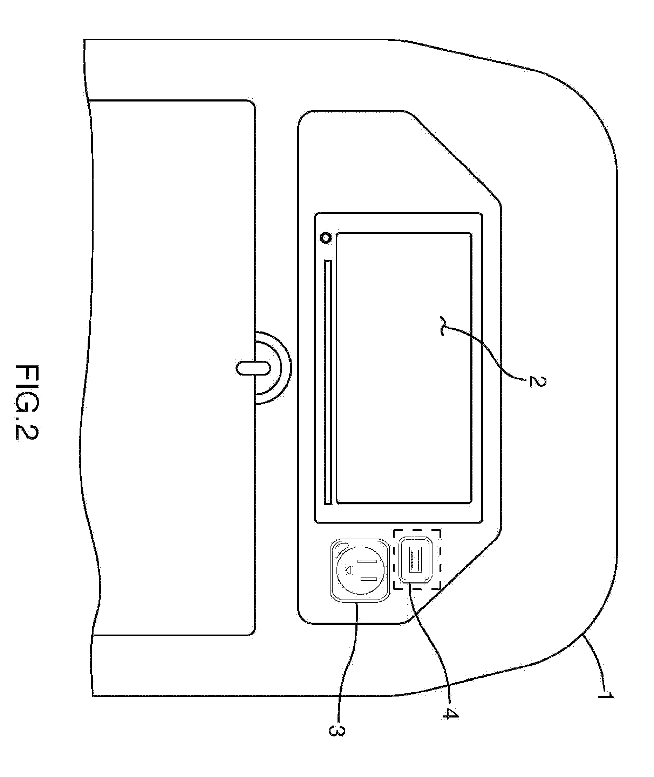

As best seen in the example of Figure 2, inflight services may include a 110 Volt electrical power outlet 3, and an inflight service access USB port 4. In the present description, the USB port 4 is used to receive a USB memory stick 6 that controls access to the inflight services. However at the option of the airline provider, the same USB port could also provide low voltage DC power and electronic connectivity between the aircraft server and a passenger laptop, MP3 player etc (not shown) may be provided to download music or video files or other inflight services.

It will be understood that the visual display 2, power outlet 3 and inflight service USB port 4 are not essential components of the invention. The visual display 2 and power outlet 3 are simply examples of the types of various inflight services that can be controlled by the control system of the invention. The USB port 4 is simply one example of a passenger interface, and it will be apparent to those skilled in the art that other interfaces can be used that do not rely on physical contact. In general terms, the access control system is interposed, between the passenger access interface and an aircraft service delivery system, to control access to inflight services in a selected manner.

Further the control system can include a global on-off control so that access to inflight services can be granted or denied to all passengers simultaneously. Such a global or central control may be useful to configure the aircraft inflight services for a particular flight or service level, for example providing free access on long flights. Global or central control may also be necessary in emergency situations for example to conserve power and obtain the full attention of passengers.

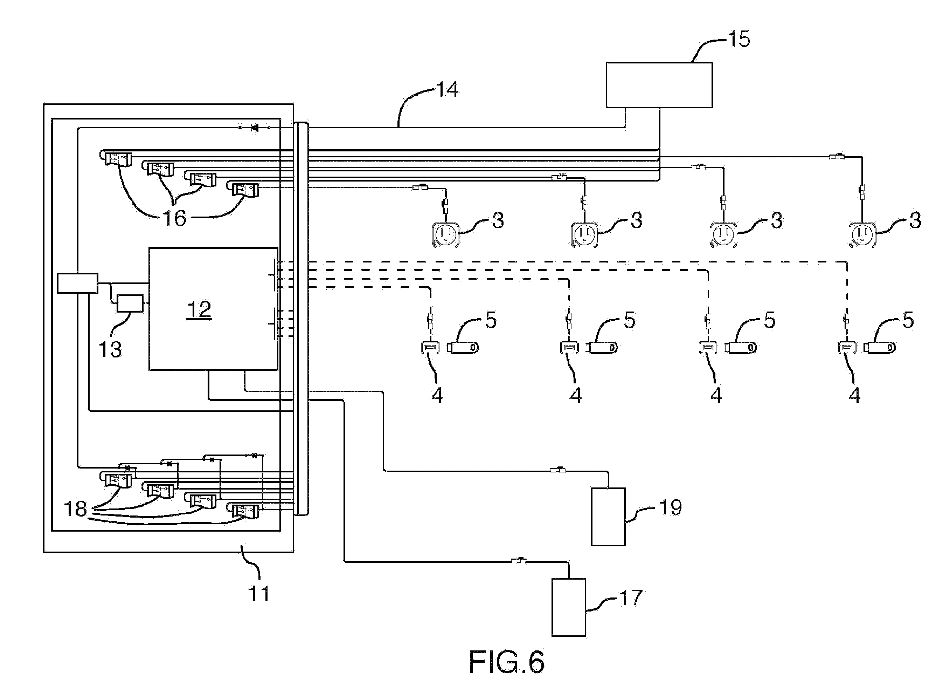

In the example embodiment shown, the control system is operated through the USB port 4, and the schematic details of various control circuits are shown in Figures 6-9. The USB port 4 is simply an example of a low cost, widely accepted standard component with memory storage that can be used and other control devices are within the scope of the invention including wireless Bluetooth^{™}, and infrared transmitter/receivers for example.

As indicated in Figures 6-9, the example control system includes a USB memory stick 5 which can also be replaced by any device that includes memory and optionally a USB plug as well. The USB memory stick 5 is purchased or otherwise provided by the airline with a selected amount of access time stored thereon, for example 4, 8 or 12 hours. The recorded time remaining is adjusted on every use by the control circuit (described below) and when the allotted time has expired, the control circuit will not allow access to the selected inflight service.

For example, inexpensive USB memory sticks 5 are commonly available with 2 gigabytes of memory which can store software and time remaining information not only for the electrical outlet access, but for a menu of other inflight services including audio, video, internet, telephone, video gaming and email.

Allotted times for access to each inflight service can be custom selected for each passenger, each seat or each flight depending on the pricing or marketing strategy of the airline. Further frequent flyers or delayed passengers may be rewarded or partly compensated through increased access to inflight services and the remaining access time may be carried over to other flights or associated airlines as a passenger loyalty reward system. Various advertisements or special offers may be stored on the USB memory stick 5 to be replayed when access is achieved also depending on the airline's marketing strategy, which can be customized for each passenger, each seat or each flight if desired.

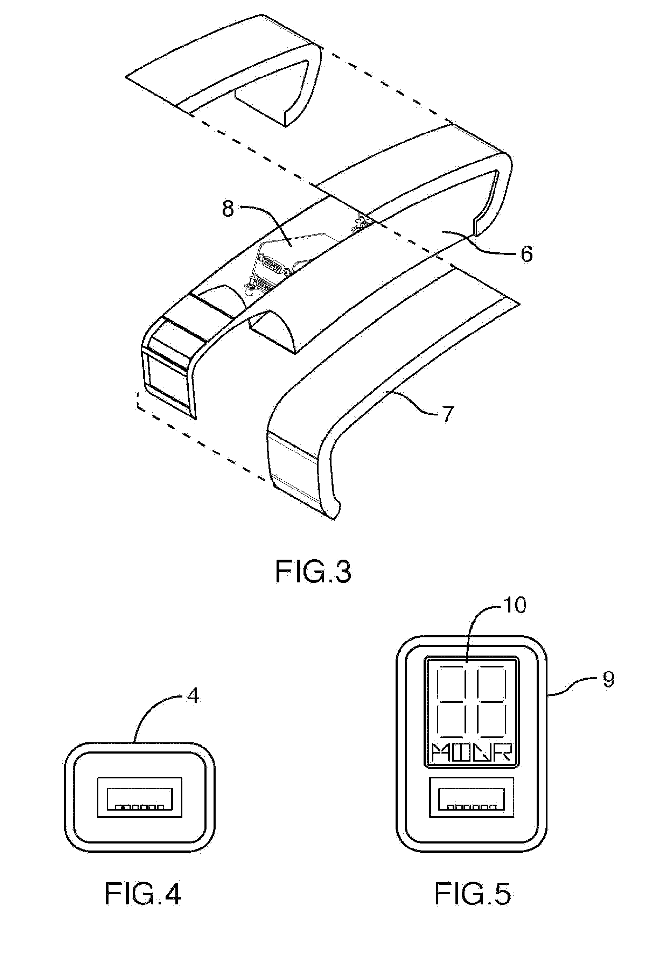

Figure 3 shows an exploded view of an aircraft passenger seat armrest 6 with the rear cushion 7 removed to reveal a possible location for a housing 8 containing the access control circuit and related equipment. Figure 4 shows a detail view of a typical USB port 4 and Figure 5 shows an alternative USB port 9 with "time remaining" value shown on a dedicated illuminated display 10.

Referring to the schematic circuit shown in Figure 6, the housing 8 (in Fig. 3) houses an access control unit 11 that includes a microprocessor 12 and memory 13 powered via a DC conductor 14 from an AC/DC power source 15 integrated with the aircraft electrical systems. The micro-processor 12 together with software stored in the memory 13 and the data/software stored on the USB memory stick 5 includes a timer function that deducts time usage.

The software and micro-processor 12 will enable access by sending an access control signal to the four AC power relay switches 16 when the "time remaining" value determined using software stored on the USB memory stick 5 is a non-zero value. When time remaining stored on the control USB memory stick 5 is zero, no access signal is sent to the relay switches 16. Each relay switch 16 is normally non-conducting and therefore electric power is not conducted through the relay switches 16 from the AC/DC power source 15 to the 110 Volt electrical power outlets 3 unless there is non-zero time remaining detected.

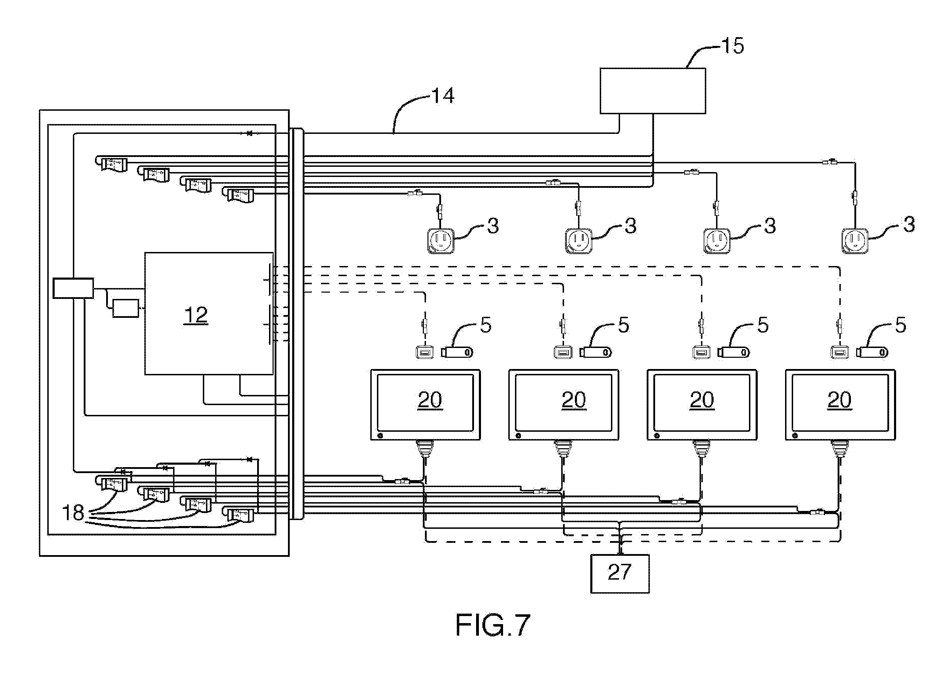

Figure 6 also shows the optional provision of an AC power access override switch 17 which enables a cabin steward to deny or grant access to AC power via the outlets 3 overriding the software on the memory stick 5. The AC power override switch communicates with the microprocessor 12 to emit a control signal to the relay switches 16. In a like manner, the AVOD (audio video on demand) override switch 19 communicates with the microprocessor 12 to emit a control signal to the DC power relay switches 18 that permits transmission of DC power from the AC/DC power source 15 to the AVOD displays 20 as shown in Figure 7.

Those skilled in the art will appreciate that, while in the example described, relay switches 16 conduct 110 Volt AC power from the AC/DC power source 15 to the 110 Volt electrical power outlets 3, and relay switches 18 conduct low voltage DC power from the AC/DC power source 15 to the AVOD displays 20, the same control system may be used to provide access to any electrically, optically or electronically delivered inflight service. For example a similar control system can deny access to visually displayed inflight services, or deny connection to the inflight services conducted through the USB port 4 thereby denying access to the aircraft servers for audio service for example.

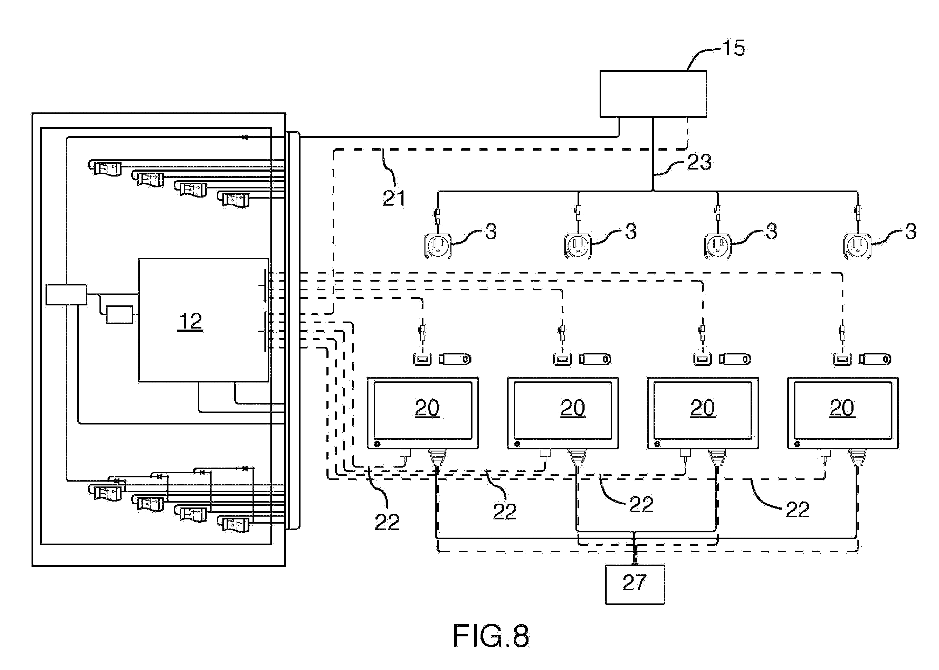

Figure 8 shows a schematic of a third embodiment of the access control system configured to permit access to four 110V AC power outlets 3 using a data bus controlling the power source 15 and four keylines 22 to transmit signals to each AVOD display 20. In this example, the power source 15 is directly connected to the outlets 3 via a 110V AC conductor 23 which will minimize wiring in some configurations.

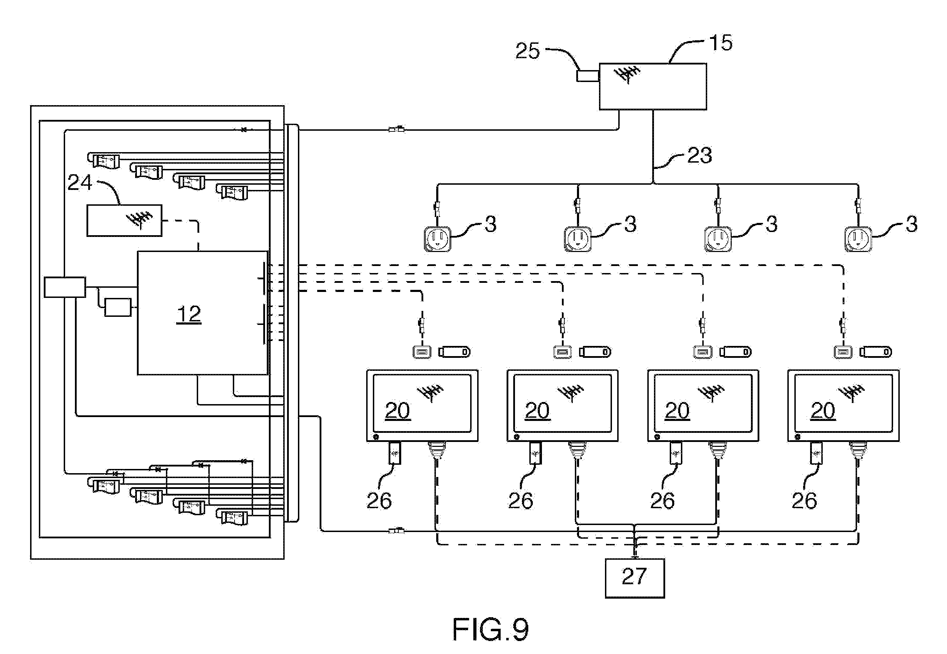

Figure 9 shows a schematic of a fourth embodiment of the access control system of Figure 8 where wireless transmitter/receiver units replace wired connections for transmitting control signals from the microprocessor 12. Transmitter/receiver unit 24 conducts an AC power control signal between the microprocessor 12 and transmitter/receiver unit 25 of the power source 15. Transmitter/receiver unit 24 conducts an AVOD control signal between the microprocessor 12 and transmitter/receiver units 26 of the AVOD displays 20.

Therefore in general terms, the invention provides an access control system for controlling individualized access, by passengers of a vehicle, to transmissions such data signals and AC/DC electrical power. The examples of the drawings show two specific transmission sources namely an AC/DC power source 15 and an AVOD system housing 27, however access control over many other types of transmissions or communications are possible as well.

The passenger access interfaces shown in the drawings include 110V AC power outlets 3 and AVOD displays 20. Each interface 3, 20 is controlled using a control circuit in communication with the transmission sources, 15, 27 respectively.

The control circuit includes: a microprocessor 12 with memory storage 13. The microprocessor 12 has a control signal emitter (such as relay switches 16 and 18, data bus 21, keylines 22 or transmitter/receiver 24) in communication with the transmission source, wherein the control signal determines access between the transmission source and the passenger access interface.

The control circuit also includes a portable memory device, such as the USB memory sticks/flash drive 5, each including stored access control software readable by the microprocessor 12 for determining when a control signal is to be emitted. The portable memory device 5 is removable by the passenger and controlled by the airline for example as described below in more detail..

The access control software stored on the portable memory device 5 includes a countdown timer function wherein a value for a variable time remaining parameter is determined. When the time remaining value is zero, the microprocessor 12 emits an access denied control signal to deny access to the transmissions via the passenger access interface. Figure 5 shows an example USB port 9 as a passenger access interface that includes a visual display 10 capable of displaying the time remaining value.

The access control unit 11 includes four AC power access relay switches 16 in communication with the microprocessor 12 to receive a control signal, and the relay switches 16 communicate transmission of AC power between the AC/DC power transmission source 15 and the 110 Volt AC power outlet passenger access interface 3 when an access granted control signal is received. The access control unit 11 also includes four DC power access relay switches 18 in communication with the microprocessor 12 to receive a control signal, and the relay switches 18 close to communicate transmission of DC power between the AC/DC power transmission source 15 and the low voltage DC powered AVOD displays 20 as passenger access interfaces with a video display and an audio capability when an access granted control signal is received.

In addition to AC/DC electric power, transmissions can also include optical signals; digital data transmissions; audio; and video signals. In addition to AC power outlets 3, AVOD displays 20 and USB ports 4, 9, the passenger access interfaces can include: an earphone jack; a video display; a touch screen display; a telephone jack; and a computer network jack. Although an aircraft vehicle is described herein, the vehicle can includes: a train; a ship; a bus; or an automobile.

The access control system permits airlines to streamline their revenue source from passenger amenities and eliminate variables that can interrupt this revenue source, such as credit/charge/debit card or similar systems of monetary transfers, The system provides a way to control access to passenger amenity equipment, that is simple to install, use, maintain and provides the airlines with an up-front revenue source that is not tied to the availability of any parts of the aircraft system nor credit cards.

The passenger pays before use can commence, pays only for what they use and can discontinue use of the system at any time thus avoiding refunds. The electrical energy and fuel savings could possibly qualify the system for a Carbon Emissions Points system. The airline can select various levels of access allowed to the passenger of any of the systems in the individual seat, such as time limits, or limits to features of the system during short commuter flights or flights to different destinations.

A first example includes providing controlled access to electrical power via the electrical outlets 3 as shown in Figure 6. In this example, power supply to and passenger access to the AVOD or other inflight entertainment system (not illustrated in Fig.6) remains independent and only power to the outlets 3 is controlled by the access control system.

In a second example shown in Figure electric power (DC) to both the AVOD displays 20 or any other inflight entertainment system as well as AC power to the outlets 3 are controlled by the access control system. Further the electrically powered individual seat position equipment can be either powered or completely off depending on the preference of the airline. In this example the airline can not use the access control system as a means of broadcasting the company logo, pre-flight safety briefing or commercials for example because DC power to the AVOD displays 20 requires insertion of the USB memory sticks 5 to actuate the DC power relay switches 18.

A third example shown in Figure 8 provides AC power for the outlets 3 and access to the AVOD displays 20 controlled by the access control system without direct interruption of the power supply through relay switches 16, 18, but instead through signals sent from the microprosser to the transmission sources ( AC/DC power source 15 and AVOD system unit 27) through control signals sent over a data bus 21 and keylines 22. The access control system operates without the associated and burdensome issues surrounding the use of credit/debit cards as described above. This example also allows the airline to broadcast the company logo, pre-flight safety briefing or commercials to all seats via the AVOD displays 20 when the USB stick 5 is not inserted.

In the event that a credit card reader is existing on the aircraft, the access control system can be retrofit and interfaced with the existing inflight entertainment system (including AVOD displays 20 and AVOD system unit 27) such that when the existing credit card reader allows access to the AVOD system, power to the outlets 3 is also provided independently by the access control system.

The access control system also provides a means to override the entire passenger amenity system in the cabin as indicated in Figure 6. In this example, the aircraft cabin crew can override the access control system with the AC power override switch 17 and with the AVOD override switch 19. Alternatively, the cabin crew can override the access control system in the entire aircraft or at selected specific seats by providing selection of seats in the software run by the microprocessor 12.

A USB memory stick 5 (i.e.: any flash drive or memory device) can be embossed with the airline logo, and is encoded with data providing a specific quantity of hours which the passengers may purchase, at any commercial outlet, at the airline ticket counters or on board the aircraft in advance of the use of this device. It is also possible for the passenger to access an airline web site to re-fill the hours recorded on the USB memory stick 5.

As shown in Figure 5 an optional "time remaining" LED read rut display 10 located conveniently close to the USB Port 9 can clearly inform the passenger as to the remaining time on the USB flash drive 5 in real time or an indicator light (not shown) on the USB flash drive which illuminates when a specific access time is remaining.

The access control system can include an "optional" Atlas™-style galley carrier USB flash drive dispenser (not illustrated). Existing Atlas food service containers and duty free containers are wheeled on and off aircraft efficiently and include standard electric connectors. The access control system dispenser can be built into this existing standard container envelope.

The access control system components can be installed prior to, simultaneously with or after the installation of any other cabin amenity system, thus avoiding maintenance scheduling conflict with other work in progress. The low voltage DC power used and relatively lightweight construction is small and light enough to qualify for the FAA 3% rule on 16g seat assemblies. This feature eliminates the requirement for extensive and expensive seat recertification costs when installing items on the seat assemblies of newer aircraft.

The very small USB Ports 4, 9 and an "optional" LED display 10 are installed into the seat back or any other suitable location in proximity to the passenger.

A very light weight 22 to 26 a.w.g. wire harness is routed from the USB Port 9 to the optional LED display 10, and to the access control unit 11 or, a very low powered wireless signal can be used as indicated in Figure 9.

The passenger purchases, in advance or on the aircraft, the airline's USB memory stick 5 is programmed with a specific number of hours, as determined by the airline's direction. This can be set in any units of time, for example up to 100 hours.

Once the passenger is seated and the onboard systems have been powered by the cabin crews, should the passenger desire to access any one or all of the systems the passenger must insert the airline provided USB drive 5 into the USB port 4, 9. The optional LED display 10, will show the time remaining to the passenger within which the system will be powered and then count down the time remaining during system use. The passenger utilizes the system of choice. When the passenger no longer wants to access any of the systems the airline USB drive 5 is removed from the USB port 4, 9.

Should the optional AC power override switch 17 or AVOD override switch 19 be installed, the cabin crew can override the access control system in the event the airline wants all passengers to have access to the systems at no charge for route specific reasons or operational reasons such as delays or preflight briefings.

When the USB flash drive 5 has no more time remaining, the passenger may purchase another or if the airline chooses, have the existing drive reloaded with authorized time by an online purchase from the airline website.

The access control system provides the following advantages over existing credit card operated systems:
advance revenue is received before use;
the reduced power consumption may qualify for a Carbon Offset Point system;
the "user pays" system reduces component use which equates to less maintenance required;
there is positive and full collection of revenues, with no sharing of revenue with credit card companies on a "per event" basis;
the access control system utilizes existing airline procedures and logistical systems (food service and duty free for example) if the airline elects to sell the flash drives on board the aircraft;
software can be changed at predetermined intervals to follow various marketing and service changes;
the access control system can be integrated with existing AVOD systems if desired;
the payment system using USB drives 5 can be overridden by cabin crew when required;
no extra external wires or power source outside of seat assemblies are required;
the access control system can control power to any passenger amenity system existing or newly installed;
access can be purchased by the passenger either on or off the aircraft and the sale can be controlled completely by the airline;
time remaining can be checked by the passenger on their own computer and if the airline desires can be recharged by accessing the airline website;
the portion of the memory on USB flash drive 5 that is not needed for the software can be used by the passenger for personal documents or other programs
the access control system eliminates the security hazard of having multiple copies of the passenger's credit card information maintained on board the aircraft fleet or transmitted to and from a central server, all of which open the possibility of data compromise;
the access control system also eliminates the possible visual compromise of credit card number and PIN while this private information is entered into a 'touch screen' system at the passenger seat:
   the access control system allows the airline to avoid the administrative workload of collecting, transmitting and collecting the "per use" charge information, since a single purchase transaction will be recorded and processed at the time the USB flash drive 5 is acquired; and
   airlines in an operating alliance with other airlines could cooperate and set the software to allow a USB flash drive 5 purchased on one airline in the alliance to be used on any or all of the others.

Although the above description relates to a specific preferred embodiment as presently contemplated by the inventor, it will be understood that the invention in its broad aspect includes mechanical and functional equivalents of the elements described herein.

## Claims

1. An access control system for controlling individualized access, by passengers of a vehicle, to transmissions selected from at least one of data signals and electrical power, the system comprising:
a transmission source; a passenger access interface; and a control circuit in communication with the transmission source,
wherein the control circuit includes:
a microprocessor with memory storage, the microprocessor having a control signal emitter in communication with the transmission source, wherein the control signal determines access between the transmission source and the passenger access interface; and
a portable memory device including stored access control software readable by the microprocessor for determining when a control signal is to be emitted, the portable memory device being removable by the passenger.

2. The access control system according to claim 1 wherein the access control software stored on the portable memory device includes a countdown timer function wherein a value for a variable time remaining parameter is determined, and when said time remaining value is zero, the microprocessor emitting an access denied control signal to deny access to the transmissions via the passenger access interface.

3. The access control system according to claim 1 or claim 2 wherein the passenger access interface includes a visual display capable of displaying the time remaining value.

4. The access control system according to any of the preceding claims wherein the control circuit includes an access relay switch, the relay switch in communication with the processor to receive said control signal, and the relay switch communicating transmissions between the transmission source and the passenger access interface when an access granted control signal is received.

5. The access control system according to claim 4 wherein the transmission source is an AC electrical power source and the relay switches communicate AC power to an AC electric power outlet.

6. The access control system according to claim 4 wherein the transmission source is an DC electrical power source and the relay switches communicate DC power to at least one of: a video display device; and an audio device.

7. The access control system according to any of the preceding claims wherein the transmissions are selected from the group consisting of: DC electric power; AC electric power; optical signals; digital data transmissions; audio; and video.

8. The access control system according to any of the preceding claims wherein the passenger access interface includes at least one of: a DC electric outlet; an AC electric outlet; an earphone jack; a video display; a touch screen display; a telephone jack; a computer network jack; and a universal serial bus (USB) jack.

9. The access control system according to any of the preceding claims wherein the vehicle is one of: an aircraft; a train; a ship; a bus; and an automobile.

10. The access control system according to any of the preceding claims wherein the control circuit includes a portable memory device override switch, the override switch communicating with the microprocessor to emit said control signal.

11. The access control system according to any of the preceding claims wherein the microprocessor includes a wireless control signal transmitter.
